# EUROPÄISCHE PATENTSCHRIFT

(11) **EP 0 783 716 B1**
(45) Veröffentlichungstag und Bekanntmachung des Hinweises auf die Patenterteilung: **22.04.1998**
(21) Anmeldenummer: 95930392.6
(22) Anmeldetag: 12.09.1995
(51) Int. Cl.: G02B 6/43, G02B 6/38, H05K 7/14

(54) **Opto-mechanische Vorrichtung mit Träger für einschiebbare elektro-optische Baugruppen**
Opto-mechanical device comprising a rack for plug-in electro-optical modules
Dispositif opto-mécanique pourvu d'un chassis pour modules électriques-optiques enfichables

(30) Priorität: 28.09.1994 DE 4434727
(43) Veröffentlichungstag der Anmeldung: 16.07.1997
(73) Patentinhaber: SIEMENS AKTIENGESELLSCHAFT, 80333 München (DE)
(72) Erfinder: SCHRECK, Hans-Günther, D-80801 München (DE); GRUHLER, Ulrich, D-80689 München (DE); MAIR, Eduard, D-81477 München (DE)
(86) Internationale Anmeldenummer: DE9501246
(87) Internationale Veröffentlichungsnummer: WO9610201

(56) Entgegenhaltungen:
- EP-A- 0 008 979
- EP-A- 0 098 205
- EP-A- 0 330 231
- EP-A- 0 486 208
- US-A- 4 872 739

## Beschreibung

Die Erfindung bezieht sich auf einen Baugruppenträger für einschiebbare elektrische Baugruppen, die über elektrooptische Sende- und Empfangseinrichtungen und eine lichtleitende Rückwandplatte miteinander verbindbar sind, wobei auf der Rückwandplatte Koppelelemente zur Strahlablenkung angeordnet sind und wobei die Baugruppen in Führungen des Baugruppenträgers geführt sind.

Ein derartiger Baugruppenträger ist zum Beispiel durch die Zeitschrift "Optical Engineering" October 1991, Vol. 30 No.10, Seite 1620 bis 1623 bekannt geworden. Darin ist eine lichtleitende Glasplatte mit dazu senkrecht stehenden elektronischen Baugruppen dargestellt, die auf ihrer der Glasplatte zugewandten Seite elektro-optische Übertragungseinheiten aufweisen, die zur Rückwandplatte senkrechte Lichtstrahlen abgeben oder empfangen. Diese Lichtstrahlen werden durch die auf der Rückwandplatte aufgebrachten holographischen Koppelelemente in einem geeigneten Winkel abgelenkt, der innerhalb der Platte Totalreflexion ermöglicht.

Ferner zeigen die EP 0 494 759 Al und die DE 39 08 786 C2 jeweils Baugruppen eines Baugruppenträgers, die untereinander Informationen auf optischem Wege übertragen, wobei Sender und Empfänger separat auf den jeweiligen Baugruppen angeordnet sind.

Die DE 29 32 364 Al offenbart optische Steckverbinderanschlüsse, die rückseitig an einschiebbaren Baugruppen angeordnet sind. Die Gegensteckverbinder am zugehörigen Baugruppenträger sind zum Ausgleich von Toleranzen flexibel gehaltert.

Ferner geht aus der DE 91 05 122 U1 eine Baugruppe hervor, deren Gehäuse in einen Träger einhängbar ist. Der Steckverbinder der Baugruppe ist dabei zusammen mit einer Leiterplatte schwimmend im Gehäuse gelagert, damit er unabhängig von Gehäusetoleranzen genau auf eine Gegensteckvorrichtung am Träger zentriert werden kann.

Es ist üblich, elektronische Baugruppen in Führungsschienen zu führen, die am Baugruppenträger befestigt sind. Der Strahlengang erfordert jedoch eine genaue Zuordnung der Sende- und Empfangseinrichtungen zu den Ein- und Auskoppelstellen der Rückwandplatte. Diese Genauigkeit kann durch die üblichen Führungsschienen des Baugruppenträgers nicht erreicht werden.

Ferner geht aus der DE 91 05 122 U1 eine Baugruppe hervor, deren Gehäuse in einen Träger einhängbar ist. Der Steckverbinder der Baugruppe ist dabei zusammen mit einer Leiterplatte schwimmend im Gehäuse gelagert, damit er unabhängig von Gehäusetoleranzen genau auf eine Gegensteckvorrichtung am Träger zentriert werden kann.

Es ist üblich, elektronische Baugruppen in Führungsschienen zu führen, die am Baugruppenträger befestigt sind. Der Strahlengang erfordert jedoch eine genaue Zuordnung der Sende- und Empfangseinrichtungen zu den Ein- und Auskoppelstellen der Rückwandplatte. Diese Genauigkeit kann durch die üblichen Führungsschienen des Baugruppenträgers nicht erreicht werden.

In der EP 0 486 208 A3 ist ein Baugruppenträger mit einschiebbaren Baugruppen und einer optischen Rückwandplatte beschrieben. Die Baugruppen tragen auf ihrer Hauptplatine die elektrischen und elektronischen Bauelemente. Die Hauptplatine ist in Führunsschienen des Baugruppenträgers geführt. Sendeeinrichtungen und eine Empfungseinrichtung sind in einer separaten Subbaugruppe zusammengefaßt, die mechanisch fest mit der Hauptplatine der Baugruppe verbunden ist. Flexible elektrische Leitungen verbinden die Subbaugruppe und die und die Hauptplatine elektrisch. Die Subbaugruppe ist mit in die Steckrichtung ragenden konischen Stiften versehen, deren freie Enden in Registrierlöcher der Rückwandplatte hineinragen.

Der Erfindung liegt die Aufgabe zugrunde eine genaue Zuordnung der Übertragungseinrichtungen der Subbaugruppe zu den Ein- und Auskoppelstellen der Rückwandplatte zu ermöglichen.

Diese Aufgabe wird durch die Erfindung gemäß Anspruch 1 gelöst.

Die Ein- und Auskoppelpunkte der Rückwandplatte weisen zu den Zentrierstiften bzw. Zentrierlöchern eine genau definierte Lage auf. Die Sende- bzw. Empfangsdioden der Subbaugruppe sind entsprechend auf die zugehörigen Zentrierlöcher bzw. Zentrierstifte der Subbaugruppe und damit auf die Ein- und Auskoppelpunkte der Rückwandplatte genau ausgerichtet. Dabei können die Zentrierzapfen bzw. Zentrierlöcher der Rückwandplatte direkt an dieser ausgebildet bzw. befestigt sein. Es ist aber auch möglich, an die Rückwandplatte z.B. einen Aluminiumrahmen anzusetzen, in der die Zentrierstifte befestigt bzw. die Zentrierlöcher ausgebildet sind. Dieser Rahmen ist im Bereich der Sende- und Empfangseinrichtungen mit Freimachungen versehen und dient als Anlage für die Anlageflächen der Subbaugruppe.

Die flexiblen Leitungen können z.B. als 1 mm dicke Koaxialkabel ausgebildet sein, über die keine Kräfte von der Baugruppe auf die Subbaugruppe übertragen werden können. Die Subbaugruppe kann z.B. über federnd nachgiebige Halterungen mit der Baugruppe verbunden sein. Diese "schwimmende" Lagerung ermöglicht es, die Subbaugruppe innerhalb gewisser Toleranzgrenzen unabhängig von der Position der Baugruppe auf die Rückwandplatte auszurichten. Dies geschieht im Zuge des Einsteckens der Baugruppe in den Baugruppenträger, ohne daß die Subbaugruppe gesondert betätigt werden muß.

Vorteilhafte Weiterbildungen der Erfindung sind in den Ansprüchen 2 bis 5 gekennzeichnet:

Durch die Weiterbildungen nach den Ansprüchen 2 und 3 wird eine einfache und in allen Koordinatenrichtungen nachgiebige Verbindung zwischen der Baugruppe und der Subbaugruppe hergestellt. Die Baugruppe kann im Baugruppenträger so geführt sein, daß zunächst die Subbaugruppe an der Rückwandplatte aufsitzt und daß die Baugruppe ein weiteres Stück bis zu ihrem Endanschlag eingedrückt wird. Dabei entsteht durch das gummielastische Lagerelement ein Federdruck auf die Subbaugruppe, so daß sich diese mit ihrer Stirnseite planparallel zur Rückwandplatte ausrichtet.

Die Weiterbildung nach Anspruch 4 ermöglicht es, die Subbaugruppe gegenüber der Rückwandplatte geringfügig zu kippen, so daß sich die Winkellage der Subbaugruppe ausschließlich durch ihre stirnseitige Anlage definiert.

Durch die Weiterbildung nach Anspruch 5 ist es möglich, die Subbaugruppe wahlfrei mit den Sende- und den Empfangseinrichtungen in beliebiger Aufteilung und Verteilung zu bestücken.

Im folgenden wird die Erfindung anhand eines in der Zeichnung dargestellten Ausführungsbeispieles näher erläutert.
- Figur 1: zeigt schematisiert einen Schnitt durch eine optische Rückwandplatte mit zwei angesetzten Baugruppen,
- Figur 2: eine Draufsicht auf die Rückwandplatte nach Figur 1 mit Koppelpunkten und Verbindungswegen,
- Figur 3: eine perspektivische Ansicht eines Teils der Rückwandplatte mit der Baugruppe nach Figur 1.

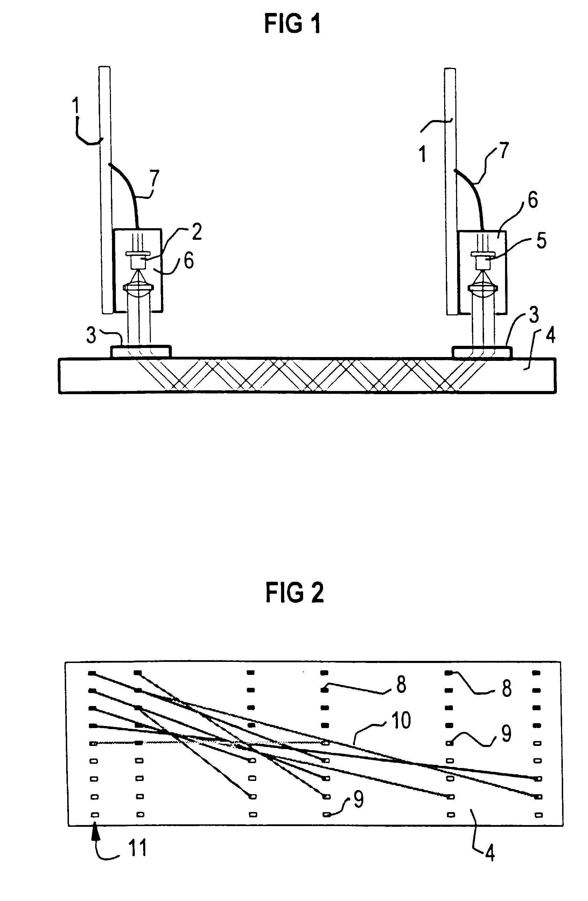

In Figur 1 ist das Prinzip einer optischen Verbindung zwischen zwei Baugruppen 1 mittels einer Sendeeinrichtung 2, Koppelelementen 3, einer optischen Rückwandplatte 4 und einer Empfangseinrichtung 5 dargestellt. Alle Sende- und Empfangseinrichtungen 2, 5 sind in einer Subbaugruppe 6 zusammengefaßt, die an der Baugruppe 1 mit Spiel gehalten ist. Die Baugruppen 1 und Subbaugruppen 6 sind über flexible Koaxialleiter 7 miteinander elektrisch verbunden.

Die Sendeeinrichtung 2 besteht z.B. aus einer Laserdiode und einen Kollimator, die einen senkrecht auf die Rückwandplatte gerichteten Lichtstrahl erzeugen. Dieser wird durch das Koppelelement 3 in einem Winkel abgelenkt, der innerhalb der Rückwandplatte Totalreflexion ermöglicht. Mit dem Koppelelement 3 läßt sich außerdem die Koordinatenrichtung des Lichtstrahls in der Rückwandplatte einstellen. Diese besteht z.B. aus einem geschliffenen und polierten Glas. Der Lichtstrahl wird an dessen Oberflächen zickzackförmig reflektiert.

Der Einkoppelwinkel ist durch das Koppelelement so abgestimmt, daß der Lichtstrahl mit hinreichender Genauigkeit auf das Koppelelement 3 der zugehörigen Empfangseinrichtung 5 trifft. Dieses lenkt den Lichtstrahl in die zur Rückwandplatte 4 senkrechte Richtung zur Empfangseinrichtung 5 um, die eine Sammellinse und eine Empfangsdiode aufweist. Diese verwandelt die empfangenen Lichtsignale in elektrische Signale, die über die flexible Koaxialleitung 7 der Baugruppe 1 zugeführt werden.

In Figur 2 sind die Positionen der den Sendeeinrichtungen 2 zugeordneten Einkoppelpunkten 8 und der den Empfangseinrichtungen 6 zugeordneten Auskoppelpunkten 9 auf der Rückwandplatte 4 markiert. Außerdem sind einige Lichtstrecken 10 dargestellt, auf denen die Lichtstrahlen die Einkoppelpunkte 8 mit den zugehörigen Auskoppelpunkten 9 verbinden, wobei sich die Lichtstrecken 10 zum Teil vielfach überkreuzen. Bei der Ausbreitung des Lichtstrahls muß lediglich darauf geachtet werden, daß sich keine Reflexionsstelle der Lichtstrecken 10 mit einem der Auskoppelpunkte überdeckt.

Die Ein- und Auskoppelpunkte 8 und 9 sind in verschiedenen senkrechten Reihen 11 angeordnet, die jeweils einer Subbaugruppe 6 entsprechen. Durch einheitliche Einbaumaße der Sendeeinrichtungen 2 und der Empfangseinrichtungen 6 ist es möglich, diese je nach Anzahl der Sende-und Empfangskanäle in beliebiger Aufteilung in der Subbaugruppe anzuordnen.

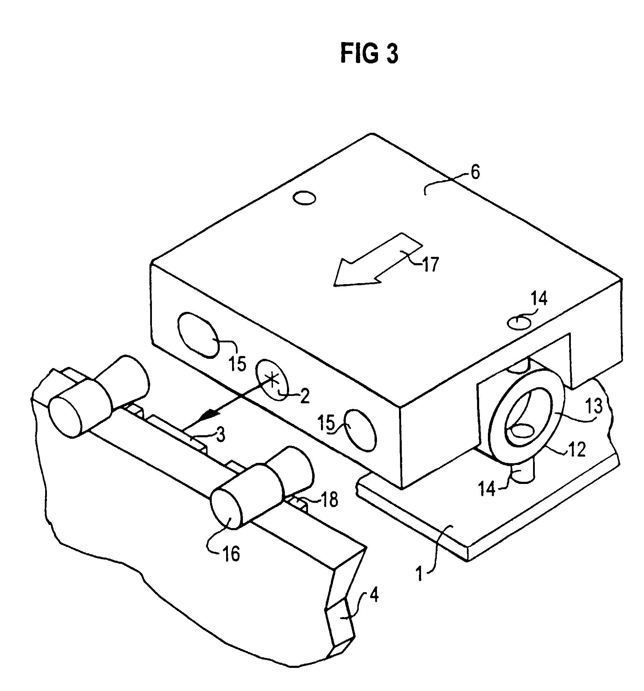

Figur 3 zeigt schematisiert eine der Subbaugruppen 6 mit der Rückwandplatte 4 und der dazugehörigen Baugruppe 1. Der Einfachheit halber ist hier nur eine der Sendeeinrichtungen 2 dargestellt. Die Subbaugruppe 6 ist an der Baugruppe 1 mittels eines Schwinglagers 12 in allen Achsrichtungen elastisch auslenkbar gehalten. Derartige Schwinglager bestehen aus einem elastomeren Ring 13 in den zwei diametral gegenüberliegende Schrauben 14 eingesetzt sind, die mit der Baugruppe 1 bzw. der Subbaugruppe 6 verbunden sind.

Die Subbaugruppe 6 weist an ihrer der Rückwandplatte 4 zugewandten Seite Zentrierlöcher 15 auf, die mit in die Rückwandplatte 4 eingesetzten Zentrierstiften 16 fluchten. Beim Eindrücken der Baugruppe 1 in den Baugruppenträger in der Richtung des Pfeiles 17 treten die Zentrierstifte 16 in die Zentrierlöcher 15 ein. Dadurch wird die Sendeeinrichtung 2 mit dem zugehörigen Koppelelement genau zur Deckung gebracht, wobei Lageunterschiede zur Baugruppe 1 durch das Schwinglager 12 ausgeglichen werden.

An die Rückwandplatte 4 sind auf der der Baugruppe 1 zugewandten Seite im Bereich der Zentrierstifte 16 Abstandsstücke 18 angebracht, an die sich die Subbaugruppe 6 anlegt. Die Abstandsstücke sind von gleicher Dicke, so daß sich die Subbaugruppe 6 mit ihrer Stirnseite planparallel zur Rückwandplatte 4 ausrichtet. Dadurch kann der gesendete Lichtstrahl genau senkrecht auf das Koppelelement 3 gerichtet werden.

Die Zentrierstifte 16 verjüngen sich kegelförmig zur Rückwandplatte 4 hin. Sie erreichen lediglich in einem kurzen Längenabschnitt ihre maximale Dicke, die dem Durchmesser der Zentrieröffnungen 5 entspricht. Dabei ist sichergestellt, daß die planparallele Winkellage der Subbaugruppe 6 durch die Achsrichtung der Zentrierstifte 16 und Zentrierlöcher 15 beeinflußt werden kann. Eines der Zentrierlöcher 15 ist zylindrisch, das andere als Langloch ausgebildet, so daß Abstandstoleranzen zwischen den Zentrierlöchern 15 und den Zentrierstiften 16 ausgeglichen werden.

## Patentansprüche

1. Opto-mechanische Vorrichtung, die einen Baugruppenträger und einschiebbare, elektrische Baugruppen (1) enthält, wobei der Baugruppenträger eine optische Rückwandplatte (4) und Führungen für die Baugruppen aufweist, wobei auf der Rückwandplatte Koppelelemente zur Ablenkung von optischen Strahlen angeordnet sind, wobei zumindest eine Baugruppe elektrooptische Sendeeinrichtungen (2) und Empfangseinrichtungen (5) besitzt, die in zumindest einer separaten Subbaugruppe (6) zusammengefaßt sind, die mit der Baugruppe (1) über flexible elektrische Leitungen (7) verbunden ist, und wobei an jeder Subbaugruppe und der Rückwandplatte wechselseitig Stifte und Bohrungen vorgesehen sind, so daß die Stifte bei eingeschobener Baugruppe in die Bohrungen hin einragen, wobei die Stifte als Zentrierstifte (16) und, die Bohrungen als Zentrierlöcher (15) ausgebildet sind und wobei jede Subbaugruppe (6) auf ihrer der Rückwandplatte (4) zugewandten Seite eine ebene Anlagefläche zur Rückwandplatte (4) aufweist
**dadurch gekennzeichnet,** daß jede Subbaugruppe (6) an der Baugruppe (1) mit Spiel gehalten ist.

2. Vorrichtung nach Anspruch 1,
**dadurch gekennzeichnet,**
daß die Baugruppe (1) und die Subbaugruppe (6) durch federelastische Lagerelemente (12) miteinander verbunden sind.

3. Vorrichtung nach Anspruch 2
**dadurch gekennzeichnet,**
daß das Lagerelement als Schwinglager (12) ausgebildet ist, das einen elastomeren Ring (13) aufweist, von dem aus diametral zwei Verbindungszapfen (14) abstehen, die in Bohrungen der Baugruppe (1) bzw. der Subbaugruppe (6) eingreifen.

4. Vorrichtung nach Anspruch 1, 2 oder 3,
**dadurch gekennzeichnet,**
daß die Zentrierstifte (16) fest mit der Rückwandplatte (4) verbunden sind und einen schmalen Führungsabschnitt aufweisen, dessen Durchmesser auf den Durchmesser der Zentrierlöcher (15) abgestimmt ist und daß der Durchmesser der Zentrierstifte zu beiden Seiten des Führungsabschnittes verringert ist.

5. Vorrichtung nach einem der vorhergehenden Ansprüche,
**dadurch gekennzeichnet,**
daß sowohl die Sendeeinrichtungen (2) als auch die Empfangseinrichtungen (5) der Subbaugruppe (6) gleiche Einbauabmessungen aufweisen.

## Claims

1. Optomechanical device which contains a mounting rack and plug-in, electric modules (1), the mounting rack having an optical backplane (4) and guides for the modules, coupling elements for deflecting optical beams being arranged on the backplane, at least one module having electro-optical transmitting devices (2) and receiving devices (5), which are combined in at least one separate submodule (6) which is connected to the module (1) via flexible electric lines (7), and pins and bores are alternately provided on each submodule and the backplane so that, with the module plugged in, the pins project into the bores, characterized in that each submodule (6) is held on the module (1) with play, the pins being constructed as centring pins (16) and the bores being constructed as centring holes (15), and each submodule (6) having, on its side facing the backplane (4), a flat supporting surface towards the backplane (4).

2. Device according to Claim 1, characterized in that the module (1) and the submodule (6) are interconnected by means of springy bearing elements (12).

3. Device according to Claim 2, characterized in that the bearing element is constructed as an oscillating bearing (12) which has an elastomeric ring (13) from which two connecting pins (14) which engage in bores in the module (1) or the submodule (6) project diametrically.

4. Device according to Claim 1, 2 or 3, characterized in that the centring pins (16) are permanently connected to the backplane (4) and have a narrow guide section whose diameter is matched to the diameter of the centring holes (15), and in that the diameter of the centring pins is reduced on both sides of the guide section.

5. Device according to one of the preceding claims, characterized in that both the transmitting devices (2) and the receiving devices (5) of the submodule (6) have the same mounting dimensions.

## Revendications

1. Dispositif opto-mécanique, qui comprend un porte-module et des modules (1) électriques pouvant être enfilés, le porte-module comportant un panneau (4) optique de paroi arrière et des glissières pour les modules, des éléments de couplage étant montés sur le panneau de paroi arrière pour dévier des rayons optiques, au moins un module comportant des dispositifs (2) d'émission et des dispositifs (5) de réception électro-optiques qui sont réunis en au moins un sous-module (6) distinct, relié au module (1) par l'intermédiaire de conducteurs (7) électriques souples, et des broches et des perçages étant prévus alternativement sur chaque sous-module et sur le panneau de paroi arrière, si bien que les broches rentrent dans les perçages lorsque le module est enfilé, les broches étant réalisées en broches (16) de centrage et les perçages en trous (15) de centrage, et chaque sous-module (6) comportant de son côté tourné vers le panneau (4) de paroi arrière une surface plane de contact avec le panneau (4) de paroi arrière, caractérisé en ce que chaque sous-module (6) est retenu avec du jeu sur le module (1).

2. Dispositif suivant la revendication 1, caractérisé en ce que le module (1) et le sous-module (6) sont reliés entre eux par des éléments (12) de palier élastiques.

3. Dispositif suivant la revendication 2, caractérisé en ce que l'élément de palier est réalisé en palier (12) flottant, qui comporte une bague (13) élastomère, dont font saillie deux tétons de liaison diamétralement opposés, qui rentrent dans des perçages du module (1) et du sous-module (6).

4. Dispositif suivant la revendication 1,2 ou 3, caractérisé en ce que les broches (16) de centrage sont fixées au panneau (4) de paroi arrière et comportent un tronçon de guidage étroit, dont le diamètre est adapté au diamètre des trous (15) de centrage, et en ce que le diamètre des broches de centrage est réduit de part et d'autre du tronçon de guidage.

5. Dispositif suivant l'une des revendications précédentes, caractérisé en ce que tant les dispositifs (2) d'émission que les dispositifs (5) de réception du sous-module (6) ont de mêmes dimensions de montage.
